# EUROPÄISCHE PATENTSCHRIFT

(11) **EP 1 663 737 B1**
(45) Veröffentlichungstag und Bekanntmachung des Hinweises auf die Patenterteilung: **22.10.2008**
(21) Anmeldenummer: 04764578.3
(22) Anmeldetag: 28.08.2004
(51) Int. Cl.: B60R 22/46

(54) **GURTSTRAFFER MIT EINER EINEN MASSENAUSGLEICH AUFWEISENDEN STRAFFERKUPPLUNG**
BELT-TENSIONING DEVICE WITH A MASS-COMPENSATING PRETENSIONING COUPLING
PRETENSIONNEUR DE CEINTURE A CONNEXION PRESENTANT UN EQUILIBRAGE DES MASSES

(30) Priorität: 11.09.2003 DE 10342230
(43) Veröffentlichungstag der Anmeldung: 07.06.2006
(73) Patentinhaber: AUTOLIV DEVELOPMENT AB, 447 83 Vargarda (SE)
(72) Erfinder: MATZEN, Frank, 22459 Hamburg (DE); LUCHT, Andreas, 25358 Horst (DE); WITTENBERG, Geert-Helge, 22848 Norderstedt (DE)
(74) Vertreter: Müller, Karl-Ernst
(86) Internationale Anmeldenummer: PCT/EP2004/009604
(87) Internationale Veröffentlichungsnummer: WO 2005/028265

(56) Entgegenhaltungen:
- DE-C- 10 059 227
- US-A- 4 597 546
- US-A- 5 794 875

## Beschreibung

Die Erfindung betrifft einen Sicherheitsgurtaufroller mit einer an dessen Gurtwelle mittels einer Kupplung angeschlossenen Straffvorrichtung, wobei die Kupplungsverbindung zwischen einem von dem Antrieb der Straffvorrichtung angetriebenen Drehkörper und der Gurtwelle mittels wenigstens eines an dem Drehkörper angeordneten und durch eine bei Auslösung der Straffvorrichtung eingesteuerte Relativbewegung zu dem Drehkörper in Kupplungseingriff mit der Gurtwelle einsteuerbaren Kupplungsgliedes ausgebildet ist und die Einsteuerbewegung des Kupplungsgliedes durch ein mit dem Kupplungsglied zusammenwirkendes und dessen Beaufschlagung durch den angetriebenen Drehkörper abbremsendes Bremselement ausgelöst wird.

Ein Sicherheitsgurtaufroller mit den vorgenannten Merkmalen ist in der DE 100 59 227 C1 beschrieben. Als Kupplungsglied ist in einer Ausnehmung des außenverzahnten und von einem Elektromotor als Strafferantrieb angetriebenen Drehkörpers eine Kupplungsklinke zwischen ihrer in der Kontur der Ausnehmung liegenden Ruhelage und einer aus der Ausnehmung heraus in Eingriff mit der zugeordneten Wellenverzahnung befindlichen Eingriffslage verschiebbar angeordnet. Die Auslenkung der Kupplungsklinke im Auslösefall geschieht über ein Bremselement, welches nach einem Ausführungsbeispiel als eine auf einer zugeordneten Laufscheibe angeordnete und einen von der Kupplungsklinke abstehenden Stift einschließende Reibfeder ausgebildet ist. Wird bei Auslösung der Straffvorrichtung der Drehkörper in Drehung versetzt, wird die Kupplungsklinke zunächst durch Eingriff ihres Stiftes in die Reibfeder festgehalten und aufgrund der Relativbewegung zwischen dem Drehkörper und der Kupplungsklinke längs der in der Ausnehmung ausgebildeten Führungsbahn radial ausgesteuert. Nach Eingriff der Kupplungsklinke in die zugeordnete Wellenverzahnung kann die Reibfeder der Drehbewegung des Drehkörpers folgen, ohne den Antrieb der Gurtwelle zu hindern.

Mit den Sicherheitsgurtaufrollern dieser Bauart ist der Nachteil verbunden, dass das Bremselement eine Haltekraft aufbringen muss, um die massebehaftete Kupplungsklinke in ihrer Ruhelage in der Ausnehmung des Drehkörpers festzulegen, da ansonsten keine weiteren Halteglieder für die Kupplungsklinke vorgesehen sind. Es ist daher nicht ausgeschlossen, dass aufgrund der im normalen Fahrbetrieb des Fahrzeuges auftretenden Beschleunigungen bzw. Erschütterungen auf die Kupplungsklinke Kräfte einwirken, die die Haltekraft des Bremselementes übersteigen, so dass die Kupplungsklinke selbsttätig ihre Eingriffslage einnimmt. Es kommt hinzu, dass die im Fahrbetrieb auftretenden Massekräfte schwierig vorherzusehen und zu bestimmen sind, so dass auch die Dimensionierung der Ansprechschwelle für das Bremselement problematisch ist.

Der Erfindung liegt daher die Aufgabe zugrunde, einen Sicherheitsgurtaufroller mit den eingangs genannten Merkmalen derart weiterzubilden, dass das Kupplungsglied ohne eine bewusst ausgelöste Ansteuerung seine Ruhelage in allen Fahrsituationen des Fahrzeuges beibehält.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass die Kupplungsverbindung zusätzlich zu dem in die Verzahnung der Gurtwelle einsteuerbaren Kupplungsglied eine mit dem Kupplungsglied zusammenwirkende und eine zur Bewegung des Kupplungsgliedes gegenläufige, Bewegung ausführende Gegenmasse umfasst, wobei das Kupplungsglied und seine Gegenmasse durch ein Verbindungsglied zwangsgesteuert aneinander gekoppelt sind. Mit der Erfindung ist der Vorteil verbunden, dass aufgrund des mit der Anordnung der Gegenmasse herbeigeführten Massenausgleichs die beim Normalbetrieb des Fahrzeuges auftretenden Massenkräfte hinsichtlich der Kupplungsklinke kompensiert sind, so dass die über das Bremselement aufzubringende und lediglich für die Aussteuerung des Kupplungsgliedes noch benötigte Kraft mit der erforderlichen Genauigkeit ermittelt und eingestellt werden kann.

Nach einem Ausführungsbeispiel der Erfindung kann vorgesehen sein, das Kupplungsglied und Gegenmasse diametral einander gegenüberliegend angeordnet sind, so dass sich eine synchrone Bewegung der Teile zueinander ergibt.

Zur Verringerung des Aufwandes kann vorgesehen sein, dass das Verbindungsglied und die Gegenmasse unter Einschaltung eines Filmscharniers einteilig miteinander ausgebildet sind.

Nach einem Ausführungsbeispiel der Erfindung ist vorgesehen, dass die Gegenmasse als ein synchron zur Auslenkung des Kupplungsgliedes in die Verzahnung der Gurtwelle einsteuerndes zweites Kupplungsglied ausgebildet ist; hiermit ist der Vorteil verbunden, dass neben dem Massenausgleich zusätzlich eine symmetrische Verriegelung des Drehkörpers mit der Gurtwelle erfolgt, wodurch die Kraftübertragung zwischen Drehkörper und Gurtwelle verbessert ist.

Nach einem Ausführungsbeispiel der Erfindung kann vorgesehen sein, dass das Verbindungsglied als eine schwenkbar angeordnete Wippe ausgebildet ist, deren äußere Enden jeweils mit Kupplungsglied und Gegenmasse verbunden sind.

Der Einsatz eines Verbindungselementes ermöglicht es, das Bremselement als ein auf das Verbindungselement einwirkendes Reibelement auszubilden.

Die Erfindung sieht in einer zweckmäßigen Ausführungsform vor, dass die Kupplungsverbindung aus zwei synchron und gegenläufig jeweils in Ausnehmungen des Drehkörpers geführten und durch eine Verschiebung in den Ausnehmungen bis in Kupplungseingriff mit einer zugeordneten Verzahnung der Gurtwelle einzusteuernden Kupplungsklinken besteht und das Verbindungsglied gleichzeitig als Bremselement in Form eines Reibringes ausgebildet ist, welcher mit jeweils einem radial abstehenden Steuerarm in eine an der zugeordneten Kupplungsklinke ausgebildete Ausnehmung eingreift. Die dieser Ausführungsform der Erfindung zugrundeliegende Ausbildung und verschiebbare Lagerung der Kupplungsklinke an dem Drehkörper ist im Grundsatz aus der gattungsbildenden DE 100 59 227 C1 bereits bekannt.

Nach einem Ausführungsbeispiel der Erfindung ist vorgesehen, dass der Steuerarm des Reibringes einen an der zugeordneten Kupplungsklinke angeordneten Stift mit einer Langlochführung übergreift, so dass eine unmittelbare Kopplung des in diesem Fall als Verbindungsglied wirkenden Reibringes mit den zugeordneten Kupplungsklinken verwirklicht ist.

Bei einer derartigen Ausbildung der Kupplungsverbindung mit zwei zwangsgeführt miteinander verbundenen Kupplungsklinken kann das Problem auftreten, dass trotz der mechanischen Kupplung der Kupplungsklinken in Abhängigkeit von der Teilung der Verzahnungen, von hinzunehmenden Fertigungstoleranzen sowie von einer nicht immer gleich bleibenden Steuerungskinematik ein undefiniertes Kupplungsverhalten eintreten kann, weil beispielsweise die eine Kupplungsklinke mit ihrem zugeordneten Zahn derart auf einen Einzelzahn der Wellenverzahnung trifft, dass der Zahn dieser Kupplungsklinke an der Zahnflanke des erreichten Zahns der Gurtwellenverzahnung abrutscht, während die gegenüberliegende Kupplungsklinke trotz ihrer mechanischen Kopplung derart auf einen zugeordneten Zahn der Gurtwellenverzahnung trifft, dass die Kupplungsklinke in die nächstfolgende Zahntiefe einfällt, so dass letztlich bezogen auf einen angestrebten synchronen Zahneingriff die beiden Kupplungsklinken asynchron mit der Wellenverzahnung in Eingriff gelangen. Dies kann dazu führen, dass der Reibring mit Steuerarmen zerstört und damit die Kupplungsverbindung unbrauchbar gemacht wird.

Um derartige Funktionssituationen zu vermeiden ist nach einem Ausführungsbeispiel der Erfindung vorgesehen, dass die Langlochführung einen den Stift der Kupplungsklinke in deren Ruhestellung eng einfassenden Abschnitt und einen den Stift in der Eingriffslage der Kupplungsklinke mit Spiel einfassenden Abschnitt aufweist. Hiermit ist gewährleistet, dass trotz der Zwangsführung der erforderliche Spielraum gegeben ist, dass die Kupplungsklinken je nach Zahneingriff geringfügig ausweichen können.

Alternativ kann vorgesehen sein, dass die spielfrei in die Kupplungsklinken eingreifenden Steuerarme federnd an dem Reibring angeordnet sind, so dass aufgrund dieser Maßnahme die Kupplungsklinken jeweils trotz Zwangsführung über den Reibring geringfügig ausweichen können.

Alternativ kann vorgesehen sein, dass die in den Kupplungsklinken ausgebildeten Ausnehmungen eine derartige Kontur aufweisen, dass die Steuerarme in teilausgesteuerter Position mit Spiel in den Ausnehmungen lagern. Hierbei ist in zweckmäßiger Weise vorgeschlagen, dass die den jeweiligen Steuerarm in sich aufnehmende Ausnehmung eine sich zum Steuerarm öffnende trichterförmige Gestalt aufweist. Dabei kann in alternativen Ausführungsformen der Erfindung vorgesehen sein, dass der Boden des Trichters eine Breite aufweist, die in etwa der Breite des Steuerarmes entspricht, so dass der Steuerarm in seiner Ruhelage bei nicht ausgelenkter Kupplungsklinke von den Begrenzungswänden der Ausnehmung eingeschlossen ist oder dass der Boden des Trichters eine Breite aufweist, die etwas breiter bemessen ist als die Breite des Steuerarms, so dass der Steuerarm in seiner Ruhelage bei nicht ausgelenkter Kupplungsklinke mit Spiel an den Boden der trichterförmigen Ausnehmung anliegt. Mit diesen Maßnahmen ist sichergestellt, dass der Reibring mit Steuerarmen einen nicht vollständig synchronen Eingriff der beiden Kupplungsklinken in die Verzahnung der Gurtwelle ausgleichen kann, ohne seine Funktionsfähigkeit einzubüßen.

In einer weiteren Alternative kann für eine synchrone Einsteuerung der an den Kupplungsklinken ausgebildeten Zähne in die Verzahnung der Gurtwelle Sorge getragen sein, so dass aufgrund der immer synchronen Einsteuerung eine Belastung des Reibringes mit Steuerarmen entfällt; hierzu ist im Einzelnen vorgesehen, dass die Verzahnung der Gurtwelle eine ungerade Anzahl von Einzelzähnen aufweist und die Kupplungsklinken jeweils mit zwei Einzelzähnen versehen sind, deren Zahnteilung halb so groß ist wie die Teilung der Verzahnung der Gurtwelle. Mit dieser Auslegung der Verzahnung der Gurtwelle einerseits sowie der Zuordnung der Einzelzähne der Kupplungsklinken andererseits ist sichergestellt, dass jeweils die in Aussteuerrichtung vorlaufenden Zähne der Kupplungsklinken in den Eingriffskreis der Gegenverzahnung der Gurtwelle gelangen, so dass die jeweils nachfolgenden Zähne der Kupplungsklinken synchronisiert in die Wellenverzahnung eingesteuert werden.

In der Zeichnung sind Ausführungsbeispiele der Erfindung wiedergegeben, welche nachstehend beschrieben sind. Es zeigen:
- Fig. 1: den Drehkörper als _Bestandteil einer Strafferkupplung mit daran gehalterter Kupplungsklinke in Vorderansicht bei in Ruhelage befindlicher Kupplungsklinke,
- Fig. 2: den Drehkörper gemäß Figur 1 in einer Rückansicht,
- Fig. 3: den Drehkörper entsprechend der Darstellung in Figur 1 bei in Eingriffslage befindlicher Kupplungsklinke,
- Fig. 4: den Drehkörper gemäß Figur 3 in Rückansicht,
- Fig. 5: den Drehkörper gemäß Figur 1 in einer weiteren Ausführungsform mit zwei Kupplungsklinken und einem die Kupplungsklinken als Bremselement steuernden Reibring,
- Fig. 6: den Gegenstand der Figur 5 in einer Einzelteildarstellung,
- Fig. 7: in einer ausschnittsweisen Darstellung die Verbindung von Reibring mit Steuerarm und zugeordneter Kupplungsklinke,
- Fig. 8: in einer ausschnittsweisen Darstellung ein weiteres Ausführungsbeispiel für die Einsteuerung der Kupplungsklinken in die Wellenverzahnung.

Soweit die Funktion des gattungsgemäßen Sicherheitsgurtaufrollers als Gegenstand der vorliegenden Erfindung in der DE 100 59 227 C1 im Einzelnen beschrieben ist, wird hierauf auch im vorliegenden Fall Bezug genommen. Insofern beschränkt sich die Darstellung in der vorgenannten Zeichnung auf die Anordnung der Kupplungsglieder bzw. Kupplungsklinken an dem Drehkörper und deren zugehörige Steuerorgane.

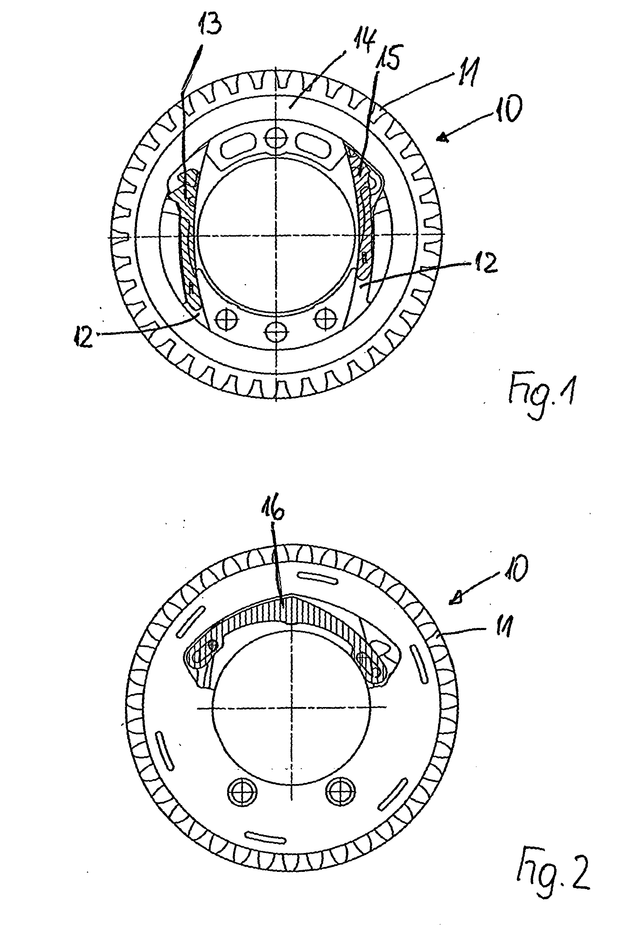

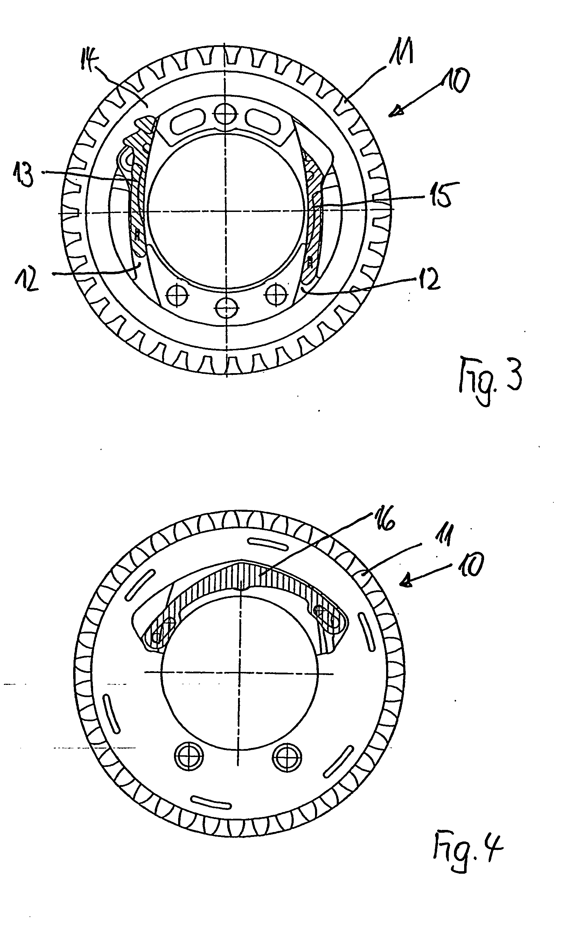

Bei dem in den Figuren 1 bis 4 dargestellten Ausführungsbeispiel ist in Übereinstimmung mit der in DE 100 59 227 C1 beschriebenen Ausbildung an dem mit einer Außenverzahnung 11 versehenen Drehkörper 10 eine Ausnehmung 12 zur Aufnahme einer in dieser Ausnehmung als Führungsbahn längsverschieblichen Kupplungsklinke 13 ausgebildet, wobei in die Ebene der Anordnung der Kupplungsklinke 13 an dem Drehkörper 10 in den mit 14 bezeichneten Zwischenraum ein mit einer entsprechenden Innenverzahnung versehener Wellenansatz der Gurtwelle eingreift, so dass die Kupplungsklinke 13 bei ihrem Ausschub aus der Ausnehmung 12 in Eingriff mit der (nicht dargestellten) Innenverzahnung der Gurtwelle gelangt und somit den Drehkörper 10 an die Gurtwelle kuppelt.

Symmetrisch zur die Kupplungsklinke 13 aufnehmenden Ausnehmung 12 ist an den Drehkörper 10 eine zweite Ausnehmung 12 gleicher Ausbildung vorhanden, in welcher ebenfalls längsverschieblich eine Gegenmasse 15 angeordnet ist derart, dass die Gegenmasse in der Ausnehmung 12 die gleiche Bewegung ausführen kann wie die Kupplungsklinke 13 in der ihr zugeordneten Ausnehmung 12. Die Massen der Kupplungsklinke 13 sowie der Gegenmasse 15 sind so aufeinander abgestimmt, dass ein Massenausgleich entsteht, indem die Gegenmasse 15 eine zur Bewegung des Kupplungsgliedes 13 gegenläufige und synchrone Bewegung ausführt. Wie sich aus Figur 2 ergibt, sind die Kupplungsklinke 13 und die Gegenmasse 15 über eine als Verbindungselement dienende Wippe 16 miteinander verbunden, so dass die auf die Kupplungsklinke 13 in verschiedenen Fahrsituationen des Kraftfahrzeuges einwirkenden Massenkräfte durch die Gegenmasse 15 kompensiert sind.

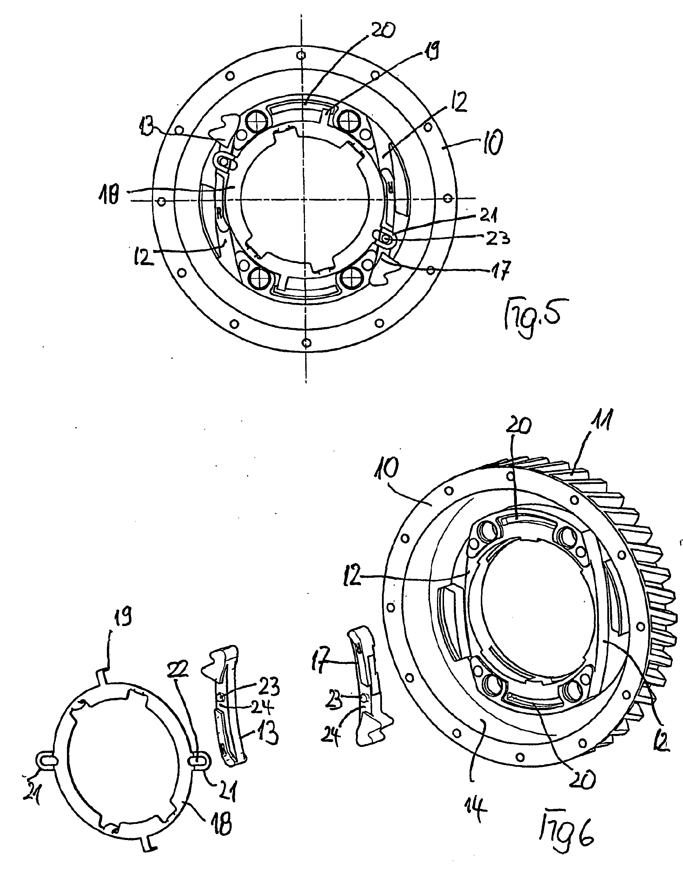

Ein weiteres Ausführungsbeispiel der Erfindung ist in den Figuren 5 und 6 dargestellt, wobei bei diesem Ausführungsbeispiel die Gegenmasse aus einer zweiten, symmetrisch zur ersten Kupplungsklinke 13 angeordneten Kupplungsklinke 17 besteht. Wie sich aus den beiden Figuren ergibt, sind mit einer gegenläufigen Bewegungsrichtung also in den spiegelbildlich angeordneten Ausnehmungen 12 des Drehkörpers 10 die beiden Kupplungsklinken 13 und 17 angeordnet.

Wie sich deutlicher aus Figur 6 entnehmen lässt, sind die beiden Kupplungsklinken 13 und 17 über einen gleichzeitig als Verbindungselement und als Bremselement im Sinne der Ansteuerfunktion dienenden Reibring 18 miteinander gekoppelt, indem von dem Reibring 18 radial abstehende Steuerarme 21 in an den Kupplungsklinken 13 und 17 ausgebildeten Ausnehmungen 24 liegen und hier mit einer Langlochführung 22 von den Kupplungsklinken 13 und 17 abstehende Stifte 23 übergreifen. Damit ist eine im Sinne einer Zwangssteuerung gegebene Kopplung der beiden Kupplungsklinken 13 und 17 aneinander verwirklicht. Der Reibring 18 ist mit axial von ihm abstehenden Ansätzen 19 versehen, die in jeweils zugeordnete, am Drehkörper 10 ausgebildete Schlitze 20 eingreifen. Diese Schlitze 20 geben die für die Ansteuerung erforderliche Relativdrehung des Drehkörpers 10 bei einwirkendem Strafferantrieb gegenüber dem Reibring 18 vor, und eben diese Relativdrehung wie in der DE 100 59 227 C1 beschrieben führt zur Aussteuerung der beiden Kupplungsklinken 13 und 17; schlagen die Ansätze 19 bei der Relativdrehung des Reibringes 18 gegenüber dem Drehkörper 10 an dem gegenüberliegenden Ende der Schlitze 20 in dem Drehkörper 10 an, so wird der Reibring 18 bei der weiteren Drehung des Drehkörpers 10 mitgenommen, so dass während der Antriebsbewegung die Kupplungsklinken 13 und 19 in Eingriff mit der zugeordneten Innenverzahnung der Gurtwelle gehalten sind.

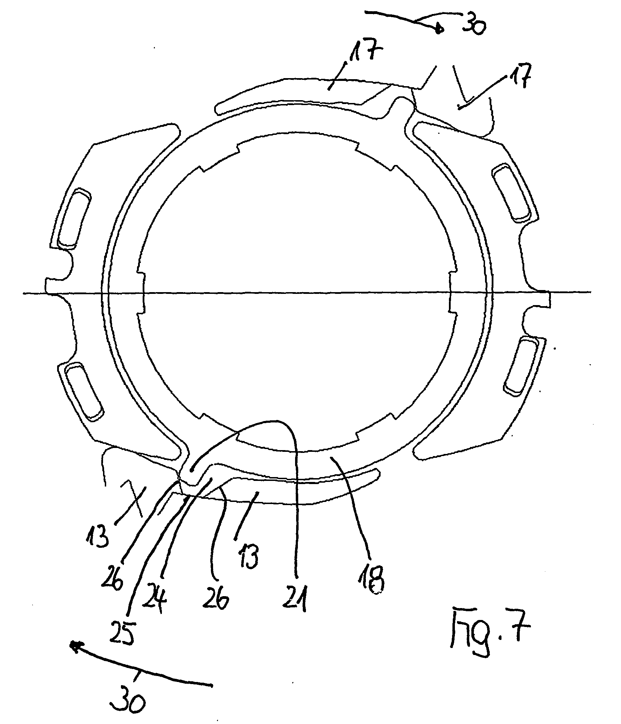

Da bei der im Ausführungsbeispiel nach Figuren 5 und 6 verwirklichten mechanischen Kopplung der Kupplungsklinken 13 und 17 aneinander nicht ausgeschlossen werden kann, dass in Abhängigkeit von der Teilung der Innenverzahnung der Gurtwelle, von hinzunehmenden Fertigungstoleranzen sowie von einer nicht immer gleich bleibenden Steuerungskinematik die Zähne der Kupplungsklinken 13 und 17 nicht synchron, sondern asynchron mit der Wellenverzahnung in Eingriff gelangen, ist gemäß dem in Figur 7 dargestellten Ausführungsbeispiel vorgesehen, dass die an jeder Kupplungsklinke 13 bzw. 17 vorgesehene Ausnehmung 24 zur Aufnahme des zugeordneten Steuerarmes 21 des Reibringes 18 eine besondere Form aufweist, die es ermöglicht, dass der Steuerarm in der Ausnehmung 24 der jeweiligen Kupplungsklinke mit einem gewissen Spiel liegt, so dass die Kupplungsklinken 13, 17 je nach dem Auftreffen ihrer Zähne auf die Verzahnung der Gurtwelle auch eine unterschiedliche Lage zu den aufgrund der Anordnung am Reibring 18 festliegenden Steuerarmen 21 einnehmen können.

Gemäß Figur 7 ist im Einzelnen die jeweilige Ausnehmung 24 an der Kupplungsklinke 13 bzw. 17 mit einer sich zum Steuerarm 21 öffnenden trichterförmigen Gestalt ausgebildet, wobei der Boden 25 der trichterförmigen Ausnehmung 24 eine Breite aufweist, die etwas breiter bemessen ist als die Breite des Steuerarms 21, so dass der Steuerarm 21 in seiner-Ruhelage bei nicht ausgelenkter Kupplungsklinke 13 bzw. 17 mit geringem Spiel an dem Boden 25 der trichterförmigen Ausnehmung 24 anliegt und damit die Kupplungsklinken in Ruhelage mechanisch gekoppelt sind. In Figur 7 ist diejenige Position dargestellt, in der aufgrund der Relativdrehung des Reibringes 18 zum die Kupplungsklinken 13, 17 tragenden Drehkörper 10 die Steuerarme 21 die Kupplungsklinken 13, 17 ausgeschoben haben, so dass die Steuerarme 21 jeweils an der in Ausschubrichtung (Pfeil 30) liegenden Begrenzungswand 26 der Ausnehmung 24 anliegen. Da sich das durch die Form der Ausnehmung 24 vermittelte Spiel während der Ausschubbewegung aufgrund der Trichterform der Ausnehmung 24 und der damit verbundenen sich zum Steuerarms 21 hin erweiternden Schrägstellung der Begrenzungswände 26 vergrößert, ist leicht einsichtig, dass die Kupplungsklinken 13 bzw. 17 bei Zahn-auf-Zahn-Berührungen mit der zugeordneten Innenverzahnung der Gurtwelle auch unterschiedliche Relativlagen bezüglich der gegenüber dem Drehkörper 10 festliegenden Steuerarme 21 einnehmen können und so eine Beschädigung der Steuerarme vermieden ist.

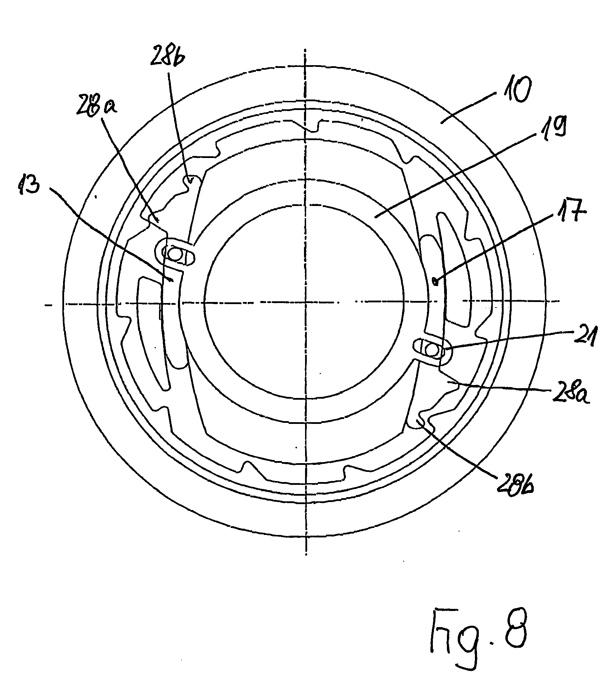

In Figur 8 ist eine weitere alternative konstruktive Auslegung wiedergegeben, um eine synchronisierte Einsteuerung der beiden Kupplungsklinken 13 und 17 ohne eine Belastung des Reibringes 19 mit Steuerarmen 21 hervorzurufen. Hierbei ist die Verzahnung der Gurtwelle mit einer ungeraden Anzahl von Einzelzähnen 27 ausgeführt, während die beiden Kupplungsklinken 13, 17 jeweils zwei Einzelzähne 28a und 28b aufweisen, deren Zahnteilung jedoch halb so groß ist wie die Zahnteilung der aus den Einzelzähnen 27 bestehenden Verzahnung der Gurtwelle. Diese Auslegung der Verzahnungen führt dazu, dass bei einer linear in der Ausnehmung 12 des Drehkörpers 10 erfolgenden Verlagerung der Kupplungsklinken 13, 17 über den Reibring 19 mit Steuerarmen 21 jeweils zunächst die in Drehrichtung vorderen Zähne 28a der Kupplungsklinken 13, 17 in den Eingriffskreis der Wellenverzahnung gelangen. Damit werden die hinteren Zähne 28b zwangsläufig synchronisiert in Eingriff mit den Einzelzähnen 27 der wellenfesten Verzahnung ausgesteuert. Bei dem dargestellten Ausführungsbeispiel ist der vordere Zahn 28a der Kupplungsklinke 13 soeben in Anschlag mit dem zugeordneten Einzelzahn 27 der Wellenverzahnung gelangt, und es ist erkennbar, dass aufgrund der ungeraden Zähnezahl der Wellenverzahnung bei der zweiten Kupplungsklinke 17 der hintere Zahn 28b synchronisiert in Eingriff mit der Wellenverzahnung gelangt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Sicherheitsgurtaufroller mit einer an dessen Gurtwelle mittels einer Kupplung angeschlossenen Straffvorrichtung, wobei die Kupplungsverbindung zwischen einem von dem Antrieb der Straffvorrichtung angetriebenen Drehkörper und der Gurtwelle mittels wenigstens eines an dem Drehkörper angeordneten und durch eine bei Auslösung der Straffvorrichtung eingesteuerte Relativbewegung zu dem Drehkörper in Kupplungseingriff mit der Gurtwelle einsteuerbaren Kupplungsgliedes ausgebildet ist und die Einsteuerbewegung des Kupplungsgliedes durch ein mit dem Kupplungsglied zusammenwirkendes und dessen Beaufschlagung durch den angetriebenen Drehkörper abbremsendes Bremselement ausgelöst wird, **dadurch gekennzeichnet, dass** die Kupplungsverbindung zusätzlich zu dem in die Verzahnung der Gurtwelle einsteuerbaren Kupplungsglied (13) eine mit dem Kupplungsglied (13) zusammenwirkende und eine zur Bewegung des Kupplungsgliedes (13) gegenläufige Bewegung ausführende Gegenmasse (15, 17) umfasst, wobei das Kupplungsglied (13) und seine Gegenmasse (15, 17) durch ein Verbindungsglied (16, 18) zwangsgesteuert aneinander gekoppelt sind.

2. Sicherheitsgurtaufroller nach Anspruch 1, **dadurch gekennzeichnet, das** Kupplungsglied (13) und Gegenmasse (15) diametral einander gegenüberliegend angeordnet sind.

3. Sicherheitsgurtaufroller nach Anspruch 1 oder 2, **dadurch gekennzeichnet, dass** das Verbindungsglied (16) und die Gegenmasse (15) unter Einschaltung eines Filmscharniers einteilig miteinander ausgebildet sind.

4. Sicherheitsgurtaufroller nach Anspruch 1, **dadurch gekennzeichnet, dass** die Gegenmasse als ein synchron zur Auslenkung des Kupplungsgliedes (13) in die Verzahnung der Gurtwelle einsteuerndes zweites Kupplungsglied (17) ausgebildet ist.

5. Sicherheitsgurtaufroller nach einem der Ansprüche 1 bis 4, **dadurch gekennzeichnet, dass** das Verbindungsglied als eine schwenkbar angeordnete Wippe (16) ausgebildet ist, deren äußere Enden jeweils mit Kupplungsglied (13) und Gegenmasse (15) gekuppelt sind.

6. Sicherheitsgurtaufroller nach einem der Ansprüche 1 bis 5, **dadurch gekennzeichnet, dass** das Bremselement aus einem auf das Verbindungselement einwirkenden Reibelement besteht.

7. Sicherheitsgurtaufroller nach Anspruch 4, **dadurch gekennzeichnet, dass** die Kupplungsverbindung aus zwei synchron und gegenläufig jeweils in Ausnehmungen (12) des Drehkörpers (10) geführten und durch eine Verschiebung in den Ausnehmungen (12) bis in Kupplungseingriff mit einer zugeordneten Verzahnung der Gurtwelle einzusteuernden Kupplungsklinken (13, 17) besteht und das Verbindungsglied gleichzeitig als Bremselement in Form eines Reibringes (18) ausgebildet ist, welcher mit jeweils einem radial abstehenden Steuerarm (21) in eine an der zugeordneten Kupplungsklinke (13, 17) ausgebildete Ausnehmung (24) eingreift.

8. Sicherheitsgurtaufroller nach Anspruch 7, **dadurch gekennzeichnet, dass** der Steuerarm (21) des Reibringes (18) einen an der zugeordneten Kupplungsklinke (13, 17) angeordneten Stift (23) mit einer Langlochführung (22) übergreift.

9. Sicherheitsgurtaufroller nach Anspruch 7, **dadurch gekennzeichnet, dass** die Langlochführung (22) einen den Stift (23) der Kupplungsklinke (13, 17) in deren Ruhestellung eng einfassenden Abschnitt und einen den Stift (23) in der Eingriffslage der Kupplungsklinke (13, 17) mit Spiel einfassenden Abschnitt aufweist.

10. Sicherheitsgurtaufroller nach Anspruch 7, **dadurch gekennzeichnet, dass** die spielfrei in die Kupplungsklinken (13, 17) eingreifenden Steuerarme (21) federnd an dem Reibring angeordnet sind.

11. Sicherheitsgurtaufroller nach Anspruch 7, **dadurch gekennzeichnet, dass** die in den Kupplungsklinken (13, 17) ausgebildeten Ausnehmungen (24) eine derartige Kontur aufweisen, dass die Steuerarme (21) in teilausgesteuerter Position mit Spiel in den Ausnehmungen (24) lagern.

12. Sicherheitsgurtaufroller nach Anspruch 11, **dadurch gekennzeichnet, dass** die den jeweiligen Steuerarm (21) in sich aufnehmende Ausnehmung (24) eine sich zum Steuerarm (19) öffnende trichterförmige Gestalt aufweist.

13. Sicherheitsgurtaufroller nach Anspruch 12, **dadurch gekennzeichnet, dass** der Boden (25) des Trichters eine Breite aufweist, die in etwa der Breite des Steuerarmes (21) entspricht, so dass der Steuerarm (21) in seiner Ruhelage bei nicht ausgelenkter Kupplungsklinke (13, 17) von den Begrenzungswänden (26) der Ausnehmung (24) eingeschlossen ist.

14. Sicherheitsgurtaufroller nach Anspruch 12, **dadurch gekennzeichnet, dass** der Boden (25) des Trichters eine Breite aufweist, die etwas breiter bemessen ist als die Breite des Steuerarms (21), so dass der Steuerarm (21) in seiner Ruhelage bei nicht ausgelenkter Kupplungsklinke (13, 17) mit Spiel an dem Boden (25) der trichterförmigen Ausnehmung (24) anliegt.

15. Sicherheitsgurtaufroller nach Anspruch 7 oder 8, **dadurch gekennzeichnet, dass** die Verzahnung der Gurtwelle eine ungerade Anzahl von Einzelzähnen (27) aufweist und die Kupplungsklinken (13, 17) jeweils mit zwei Einzelzähnen (28a, 28b) versehen sind, deren Zahnteilung halb so groß ist, wie die Teilung der Verzahnung der Gurtwelle.

## Claims

1. Seat belt retractor with a tensioning device connected to the belt shaft by means of a coupling, whereby the coupling device is formed between a rotating body driven by the drive of the tensioning device and the belt shaft by means of at least one coupling member located on the rotating body which can be displaced into coupling engagement with the belt shaft by means of a relative movement to the rotating body occurring when the tensioning device is triggered and the displacement movement of the coupling member is carried out by means of a braking element cooperating with the coupling member being moved by the driven rotating body **characterised in that** the coupling connection, in addition to the coupling member (13) which can be moved into the toothing of the belt shaft includes a counter mass (15,17), which cooperates with the coupling member (13) and which carries out a movement counter to the movement of the coupling member (13) whereby the coupling member (13) and its counter mass (15, 17) are necessarily coupled to one another be means of a connecting member (16, 18).

2. Seat belt retractor according to Claim 1, **characterised in that** coupling member (13) and counter mass (15) are located diametrically opposite one another.

3. Seat belt retractor according to Claim 1 or 2, **characterised in that** the connecting member (16) and the counter mass (15) are formed in one piece with one another by means of a film-type hinge.

4. Seat belt retractor according to Claim 1, **characterised in that** the counter mass is in the form of a second coupling member (17) which is movable into the toothing of the belt shaft synchronously with the displacement of coupling member (13).

5. Seat belt retractor according to any of Claims 1 to 4, **characterised in that** the connecting member is in the form of a rocker (16) which can be pivoted, whose outer ends are connected respectively with the coupling member (13) and the counter mass (15).

6. Seat belt retractor according to any of Claims 1 to 5, **characterised in that** the brake element is in the form of a friction element which influences that connecting element.

7. Seat belt retractor according to Claim 4, **characterised in that** the coupling connection consists of two coupling latches (13,17) guided synchronously and in opposite directions to one another within recesses (12) of the rotating body (10) which can be moved into coupling engagement with the allocated toothing of the belt shaft by means of displacement within the recesses (12) and that at the same time the connecting member is designed as a brake element in the form of a friction ring (18) which engages in a recess (24) formed on the allocated coupling latch (13,17) by means of one radially projecting control arm (21) respectively.

8. Seat belt retractor according to Claim 7, **characterised in that** the control arm (21) of the friction ring (18) fits over a pin (23) located on the allocated coupling latch (13, 17) with an elongated hole guide (22).

9. Seat belt retractor according to Claim 7, **characterised in that** the elongated hole guide (22) has a section which closely surrounds the pin (23) of the coupling latch (13, 17) in its resting position and a section which engages the pin (23) in the engaged position of the coupling latch (13, 17) with a free play.

10. Seat belt retractor according to Claim 7, **characterised in that** the control arms (21) engaging in the coupling latches (13, 17) without play are arranged on the friction ring in a spring-loaded manner.

11. Seat belt retractor according to Claim 7, **characterised in that** the recesses formed in coupling latches (13,17) form such a contour that the control arms (21) in their partly displaced position lie in recesses (24) with a free play.

12. Seat belt retractor according to Claim 11, **characterised in that** the respective recess (24) which accommodates the respective control arm (21) has a funnel-shaped form opening towards the control arm (19).

13. Seat belt retractor according to Claim 12, **characterised in that** the floor (25) of the funnel has a width which approximately corresponds to the width of the control arm (21), so that the control arm (21) is enclosed by the limiting walls (26) of the recess (24) in its resting position when the coupling latch (13,17) is not displaced.

14. Seat belt retractor according to Claim 12, **characterised in that** floor (25) of the funnel has a width which is somewhat greater than the width of control arm (21), so that the control arm (21) lies on the floor (25) of funnel-shaped the recess with free play in its resting position when the coupling latch (13,14) is not displaced.

15. Seat belt retractor according to Claim 7 or 8, **characterised in that** the toothing of the belt shaft has an uneven number of individual teeth (27) and that the coupling latches (13, 17) are each provided with two individual teeth (28a, 28b) whose tooth spacing is half as great as the spacing of the toothing of the belt shaft.

## Revendications

1. Enrouleur de ceinture de sécurité comportant un prétensionneur relié à l'arbre d'enroulement de celui-ci au moyen d'un couplage, l'assemblage couplé entre un corps rotatif, actionné par le système d'entraînement du prétensionneur, et l'arbre d'enroulement, étant formé par au moins un organe de couplage, monté sur le corps rotatif et pouvant être commandé en prise avec l'arbre d'enroulement par l'intermédiaire d'un mouvement relatif par rapport au corps rotatif, commandé par le déclenchement du prétensionneur, et le mouvement de commande de l'organe de couplage étant déclenché par un élément de freinage qui coopère avec l'organe de couplage et qui freine les efforts exercés sur celui-ci par le corps rotatif actionné, **caractérisé en ce que** l'assemblage couplé, en plus de l'organe de couplage (13) pouvant être commandé en prise avec la denture de l'arbre d'enroulement, comporte une contre-masse (15, 17), qui coopère avec l'organe de couplage (13) et qui effectue un mouvement en sens opposé au mouvement de l'organe de couplage (13), l'organe de couplage (13) et sa contre-masse (15, 17) étant couplés l'un à l'autre, par commande forcée, par un organe de liaison (16, 18).

2. Enrouleur de ceinture de sécurité selon la revendication 1, **caractérisé en ce que** l'organe de couplage (13) et la contre-masse (15) sont disposés en étant diamétralement opposés.

3. Enrouleur de ceinture de sécurité selon la revendication 1 ou 2, **caractérisé en ce que** l'organe de liaison (16) et la contre-masse (15) sont réalisés d'un seul tenant l'un avec l'autre avec un film formant charnière intercalé.

4. Enrouleur de ceinture de sécurité selon la revendication 1, **caractérisé en ce que** la contre-masse est réalisée sous la forme d'un deuxième organe de couplage (17) qui, de manière synchrone à la déviation de l'organe de couplage (13), est commandé en prise avec la denture de l'arbre d'enroulement.

5. Enrouleur de ceinture de sécurité selon l'une quelconque des revendications 1 à 4, **caractérisé en ce que** l'organe de liaison est réalisé sous la forme d'une bascule (16), qui est montée pivotante et dont les extrémités extérieures sont couplées respectivement avec l'organe de couplage (13) et la contre-masse (15).

6. Enrouleur de ceinture de sécurité selon l'une quelconque des revendications 1 à 5, **caractérisé en ce que** l'élément de freinage est formé par un élément de friction qui agit sur l'élément de liaison.

7. Enrouleur de ceinture de sécurité selon la revendication 4, **caractérisé en ce que** l'assemblage couplé est formé par deux cliquets de couplage (13, 17), guidés de manière synchrone et en sens opposé respectivement dans des évidements (12) du corps rotatif (10) et commandés par un déplacement dans les évidements (12) jusqu'à entrer en prise avec une denture associée de l'arbre d'enroulement, et l'organe de liaison est configuré en même temps sous la forme d'un élément de freinage formé par une bague de friction (18), laquelle s'engage avec respectivement un bras de commande (21), en saillie radiale, dans un évidement (24) ménagé sur le cliquet de couplage (13, 17) associé.

8. Enrouleur de ceinture de sécurité selon la revendication 7, **caractérisé en ce que** le bras de commande (21) de la bague de friction (18) s'engage avec un trou de guidage oblong (22) sur un téton (23) agencé sur le cliquet de couplage (13, 17) associé.

9. Enrouleur de ceinture de sécurité selon la revendication 7, **caractérisé en ce que** le trou de guidage oblong (22) comporte une partie enserrant étroitement le téton (23) du cliquet de couplage (13, 17) dans la position de repos de celui-ci et une partie enserrant avec un jeu le téton (23) dans la position d'engrènement du cliquet de couplage (13, 17).

10. Enrouleur de ceinture de sécurité selon la revendication 7, **caractérisé en ce que** les bras de commande (21), s'engageant sans jeu dans les cliquets de couplage (13, 17), sont agencés de manière flexible sur la bague de friction.

11. Enrouleur de ceinture de sécurité selon la revendication 7, **caractérisé en ce que** les évidements (24), réalisés dans les cliquets de couplage (13, 17), ont un contour tel que les bras de commande (21), dans une position partiellement sortie, sont logés avec un jeu dans les évidements (24).

12. Enrouleur de ceinture de sécurité selon la revendication 11, **caractérisé en ce que** l'évidement (24), qui reçoit le bras de commande (21) correspondant, est configuré en forme de cône s'ouvrant vers le bras de commande (19).

13. Enrouleur de ceinture de sécurité selon la revendication 12, **caractérisé en ce que** le fond (25) du cône a une largeur qui correspond sensiblement à la largeur du bras de commande (21), de telle sorte que le bras de commande (21), dans sa position de repos, lorsque le cliquet de couplage (13, 17) n'est pas dévié, est enserré par les parois de délimitation (26) de l'évidement (24).

14. Enrouleur de ceinture de sécurité selon la revendication 12, **caractérisé en ce que** le fond (25) du cône a une largeur qui est quelque peu plus grande que la largeur du bras de commande (21), de telle sorte que le bras de commande (21), dans sa position de repos, lorsque le cliquet de couplage (13, 17) n'est pas dévié, est en appui avec un jeu sur le fond (25) de l'évidement (24) en forme de cône.

15. Enrouleur de ceinture de sécurité selon la revendication 7 ou 8, **caractérisé en ce que** à denture de l'arbre d'enroulement comporte un nombre impair de dents (27) et les cliquets de couplage (13, 17) sont munis chacun de deux dents (28a, 28b), dont le pas de dent correspond à la moitié du pas de dent dans la denture de l'arbre d'enroulement.
